# EUROPEAN PATENT SPECIFICATION

(11) **EP 0 671 048 B1**
(45) Date of publication and mention of the grant of the patent: **08.10.1997**
(21) Application number: 93916293.9
(22) Date of filing: 05.07.1993
(51) Int. Cl.: G11B 33/04, G11B 23/00

(54) **COMPACT DISC HOLDER TRAY WITH DEVICE FOR REMOVING COMPACT DISCS FROM THEIR CONTAINER**
BEHÄLTER FÜR COMPACT DISCS MIT VORRICHTUNG ZUM ENTFERNEN DER DISC
COFFRET POUR DES DISQUES COMPACTS AVEC DISPOSITIF POUR RETIRER LE DISQUE

(30) Priority: 11.08.1992 NL 9201437
(43) Date of publication of application: 13.09.1995
(73) Proprietor: DAUTZENBERG, Joseph, Hubertus, NL-6372 GJ Landgraaf (NL)
(72) Inventor: DAUTZENBERG, Joseph, Hubertus, NL-6372 GJ Landgraaf (NL)
(86) International application number: NL9300141
(87) International publication number: WO9405010

(56) References cited:
- EP-A- 0 356 539
- EP-A- 0 429 195
- DE-A- 3 425 579
- DE-A- 3 715 187
- DE-C- 144 596

## Description

The invention is a holder tray with a device for simplifying the removal of compact discs from their containers. Compact discs are usually packaged in plastic boxes, containing a holder tray which incorporates a rosette of resilient, inverted-L-shaped, mounting elements, which keep the compact disc immobile in the box.

It has been found that the compact disc is held so firmly in its container that the disc bends as it is removed, and can thus easily suffer damage by being dropped when it jumps back into shape.

The invention offers a solution to this problem by way of a push button, which is positioned on the rosette of mouning elements and is equipped with a spring element that rests against the compact disc. The spring element lifts the compact disc after the device has been pressed down.

Devices for lifting compact-disks are known from the European patent application EP-A-429195. A four-armed spring urges the disk upwards when the detent means are pressed. This publication describes also a pushbutton foreseen with pivoting arms. Both applications have the arms resting upon the resting surface of the container, with the result of less gripping surface of the detent means and only a four point resting of the disk which could lead to deformation of the disk. European patent application EP-A-356539 describes an incorporated pushbutton in the tray. The pushbutton is provided with pivoting arms and detent means molded together in one piece with the tray. The disadvantage is here that the detent means have to be very thin and are therefore vulnerable and the whole of the tray has to be made out of quality resilient plastic material. The German patent application DE-A-3715187 describes a pushbutton with four arms which are bended upwards and pivoting. The pushbutton has here the function to force the compact-disk upwards from the detent means. This means that the arms have to exert a reasonable force against the locking action of the detent means.

The object of the invention is to use the unlocking action of the detent means with a attention drawing button which can be placed in existing trays and does not interfere with the storage of the compact-disk.

The invention is described with reference to the drawings.
Fig. 1 shows a top view of the partially removed push button.
Fig. 2 shows a section of the device with the compact disc in two positions.
Fig. 3 shows a version of the device with a separate spring element.
Fig. 4 shows a version with an ejector element and separate spring.
Fig. 5 shows a section along the line 5-5

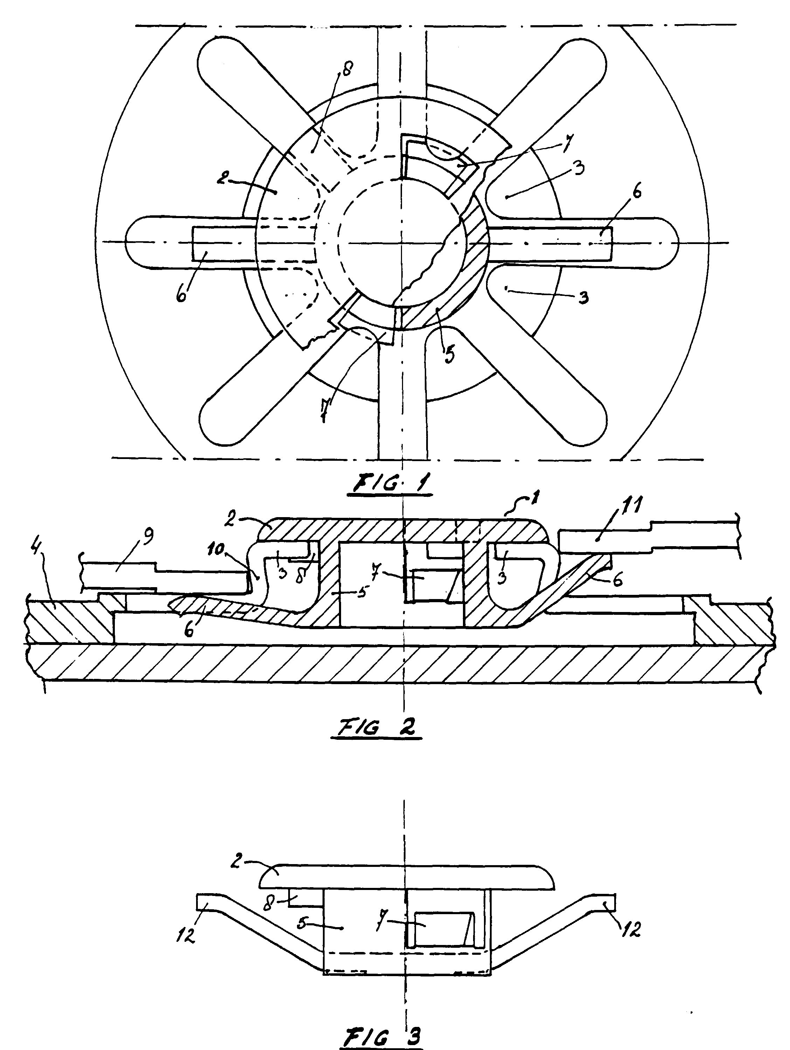

In Fig. 1 the device is indicated by (1). The top (2) is supported by the mounting elements (3) in the holder tray (4). Attached to the top (2) is a cylindrical part (5) that fits easily between the mounting elements (3). Attached to the cylindrical parts (5) are spring elements (6) that are thinner than the gaps between the mounting elements (3). Cams (7) on the cylindrical elements (5) prevent the device (1) from dropping out of the holder tray (4). A cam (8) is fitted below the top (2) to prevent the device (1) from rotating, thus preventing the spring elements (6) coming under the mounting elements (3).

Fig. 2 shows the compact disc as it is held in place by the mounting elements (3) in the holder tray (4). Section (10) of each mounting element (3) is slightly conical, so that the compact disc is pressed on to the holder tray (4). (11) shows the compact disc immediately after the device (1) has been pressed. Pressing down the device (1) causes the mounting elements (3) to bend downwards under the top (2) of the device (1), so that section (10) of each mounting element (3) moves towards the centre of the holder tray (4). The compact disc (9, 11) is then released and brought into position (11) by the spring element (6), where it is free of the holder tray (4) and can be easily removed from the container. The elasticity of the spring elements (6) is sufficient to lift the compact disc but not sufficient to break the grip of the mounting elements (3).

It is advantageous for the device (1) to be made of plastic in one piece, as an injection moulded part. Fig. 3 shows a variant with a separately fitted spring element (12) that can be made of a material with better elastic properties.

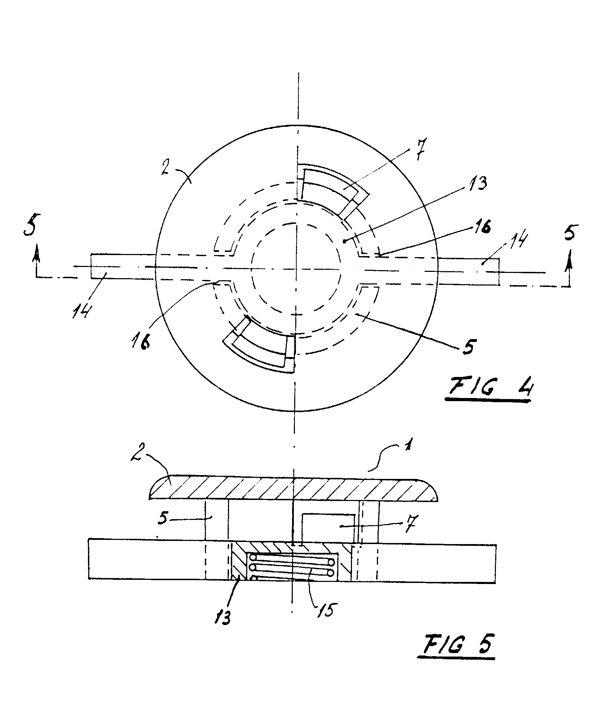

Fig. 4 shows a variant of the device comprising a top (2) and a first cylinder (5) which carries an ejector element consisting of a second cylinder (13) fitting inside the first cylinder (5) and being provided with two or more ejector arms reaching radially through grooves (16) in the first cylinder (5) and the second cylinder (13) being spring biased by a compression spring (15) incorporated in the second cylinder (13) for providing an ejection force.

The drawings also show a variant with openings (17) in the top; these are present for technical reasons associated with the injection moulding process. More complex moulds can be used to manufacture the device without openings in the top.

## Claims

1. A compact disk holder tray incorporating a rosette of resilient mounting elements (3) for holding a compact disc (9, 11) and keeping it immobile, comprising a device in the centre of said mounting elements (3) for removing the compact disk (9, 11) from the holder tray, said device consisting of top (2) having a diameter less than the central opening of a compact disk (9, 11) and resting on the top of said mounting elements (3), a first cylinder (13) carrying an ejector element (6, 12, 14) extending radially outward between said resilient mounting elements (3), characterised by said ejector element (6, 12, 14) being such that it is spring biased by a disk (9) held by said mounting elements (3), for ejecting said disc (9) by means of the spring bias when pressure is exerted on said top (2) of the device for releasing the disc (9) from said mounting elements (3).

2. Compact disc holder tray according to claim 1, characterised in that said first cylinder (13) is provided within a second cylinder (5) which is attached to said top (2), said first cylinder (13) incorporating a compression spring (15) and being provided with two or more ejector arms (14) reaching through grooves (16) in said second cylinder (5).

## Patentansprüche

1. Behälter für Compact-Discs enthaltend eine Rosette aus federenden Halterelementen (3) zum festhalten einer Compact-Disc (9, 11) und diese unbeweglig zu halten, mit einem Hilfsmittel innerhalb des Zentrums der obenerwähnte Halterelementen (3) zum Entfernen der Compact-Disc (9, 11) aus dem Behälter versehen, obenerwähntes Hilfsmittel bestehend aus Oberteil (2) mit einem Diameter, der kleiner als die Zentralöffnung einer Compact-Disc (9, 11) ist und stützt auf der Ueberseite der obenerwähnte Halterelemente (3), einen ersten Zylinder (13), der ein Auswurfelement (6, 12, 14) trägt, das radial zwischen obenerwähnte federende Halterelemente (3) hinausragt, gekennzeichnet durch obenerwähnte Auswurfelement (6, 12, 14) das so ist, daß es federend gespannt ist durch ein Disc (9), die durch obenerwähnte Halterelemente (3) festgehalten wird, zum Au swerfen obenerwähnte Disc (9) mittels der Federspannung wenn Druck ausgeübt wird auf obenerwähnte Oberteil (2) des Hilfsmittels zum entfernen der Disc (9) von den Halterelementen (3).

2. Behälter für Compact-Discs nach Anspruch 1 dadurch gekennzeichnet daß obenerwähnte ersten Zylinder (13) innerhalb ein zweiten Zylinder (5) ist vorgesehen der an obenerwähnte Oberteil (2) befestigd ist, obenerwähnte ersten Zylinder (13) ein Druckfeder (15) enthält und versehen ist mit zwei oder mehr Auswurfarmen (14) welche durch Slitze (16) innerhalb zweiten Zylinder (5) hinausragen.

## Revendications

1. Coffret pour des disques compacts comprenant une rosette élastique des éléments de montage (3) pour retenir le disque (9, 11) et en immobilisant celui-là, composant d'une ressource dans le centre des lesdits éléments de montage (3) pour rétirer le disque compact (9, 11) du coffret, ladite ressource étant composée de la partie supérieure (2) avec une diamètre inférieur du trou central d'un disque compact (9, 11) qui repose sur la surface supérieure des éléments de montage (3), un premier cylindre (13) qui porte une élément d'ejection (6, 12, 14) étendant radialement vers l'extérieur entre des éléments de montage (3), charactérisée par ledit élément d'ejection (6, 12, 14) soyer de cette manière la a biaisser de ressort par un disque (9), tenu par lesdits éléments de montage (3) pour éjecter ledit disque (9), par moyen de ressort biaié quand pression est exercée sur la partie supérieure (2) des lesdits éléments de montage (3).

2. Coffret pour des disques compacts en accordance de la revendication 1 charactérisé par ledit premier cylindre (13) soit prévu dans un deuxième cylindre (5) quel est joint à ladite partie supérieur (2), ledit premier cylindre (13) incorporant un ressort de compression (15) et prévu de deux ou plusieurs arbres d'ejections (14) étendant vers des rainures (16) dans ledit deuxième cylindre (5).
